# EUROPEAN PATENT APPLICATION

(11) **EP 1 022 434 A2**
(43) Date of publication of application: **26.07.2000**
(21) Application number: 99309425.9
(22) Date of filing: 25.11.1999
(51) Int. Cl.: F01D 5/18

(54) **Gas turbine blade cooling configuration**

(30) Priority: 25.01.1999 US 236715
(71) Applicant: GENERAL ELECTRIC COMPANY, Schenectady, NY 12345 (US)
(72) Inventor: Willett, Fred Thomas, Burnt Hills, New York 12027 (US); Lewis, Doyle C., Greer, South Carolina 29651 (US)
(74) Representative: Pedder, James Cuthbert

(57) **Abstract**

A gas turbine component (16) has an airfoil portion (14) and a shank portion (16), the airfoil portion (14) having leading and trailing edges (15, 12), and an internal fluid cooling circuit. The internal fluid cooling circuit has a serpentine configuration including plural radial outflow passages (30, 32, 36, 40, 44) and plural radial inflow passages (34, 38, 42, 46). Adjacent radial outflow and inflow passages are connected by one or more transverse openings (54) located in radially extending ribs (50) which separate the adjacent radial outflow and inflow passages (30, 32, 34, 36, 38, 40, 42, 44, 46). The openings have a substantially elliptical shape.

## Description

This invention relates to turbomachinery, and more particularly, to transverse fluid connectors between adjacent radial passages in closed cooling circuits of gas turbine buckets.

In the manufacture of gas turbine blade components, ceramic cores are often used to form the cooling cavities and passages within the airfoil portions of the buckets and nozzles used in the hot section of the gas turbine. The serpentine geometry of these radial cooling passages usually includes 180 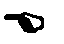 turns at both the root and tip portions of the airfoil portion of the bucket or nozzle. The ceramic core is essentially a solid body which is shaped to conform to the complex interior cooling passages of the bucket or nozzle (for simplicity, reference will be made herein simply to the "bucket," but it will be understood that the invention is applicable to both rotating buckets as well as stationary nozzles). The core is placed within a casting mold prior to pouring of molten metal into the mold. The casting mold consists of a ceramic shell which confines the molten metal, forms the exterior shape of the bucket, and fixes the ceramic core within the bucket.

Closed circuit steam cooled gas turbine buckets require more serpentine cooling passages than conventionally cooled gas turbine buckets. As a result, the ceramic core is much more prone to breakage and shift during the casting process than cores for conventionally cooled buckets. In addition, the requirement of closed circuit cooling eliminates the possibility of support from a trailing edge exit core. Moreover, since the buckets are cast as single crystals, increased time within the furnace is required. Accordingly, the cooling circuit, and hence the ceramic core, must be designed so that core breakage and movement is minimized without adversely effecting either the efficiency of the cooling circuit or the structural integrity of the bucket.

Cooling passage connectors have been used in cores for gas turbine buckets designed by the assignee of this invention. These connectors, however, were not designed to be benign to the cooling circuit, and were removed from the core prior to casting. It has also been the practice of the assignee to help stiffen the internal core by tying the adjacent ceramic coolant passage sections with cross ties to enhance stiffness. In the past, however, these cross ties have been round in cross section. It has been discovered that the round cross ties create undesirable stress concentrations, and the present invention seeks to minimize or eliminate such stress concentrations.

In accordance with this invention, the transverse passages between adjacent radial cooling passages are elliptical in shape, formed by utilizing elliptically shaped quartz rods within the ceramic core. When the core is removed, the elliptical passages remain, creating coolant cross flow between adjacent radial passages. The elliptical shape is elected to minimize stress concentration in the bucket. The number and location of the elliptical quartz rods (and hence, transverse cooling passages) are selected to avoid any severe reductions in cross sectional area at any location within the interior of the bucket, and they are spaced and sized to minimize the effect on the cooling flow in the serpentine cooling circuit.

Accordingly, in its broader aspects, the present invention relates to a gas turbine component having an airfoil portion and a shank portion, the airfoil portion having leading and trailing edges, and an internal cooling circuit, the internal cooling circuit having a serpentine configuration including plural radial outflow passages and plural radial inflow passages, and wherein adjacent radial outflow and inflow passages are connected by one or more transverse openings located in radially extending ribs which separate the adjacent radial outflow and inflow passages and wherein the openings have a substantially elliptical shape.

The invention will now be described in greater detail, by way of example, with reference to the drawings, in which:-
Figure 1 is a side elevation , partly in section, illustrating a closed circuit cooling system for a gas turbine bucket incorporating transverse cooling passage connectors in accordance with the invention;
Figure 2 is a partial section taken along the lines 2-2 of Figure 1; and
Figure 3 is a section taken along the line 3-3 of Figure 2.

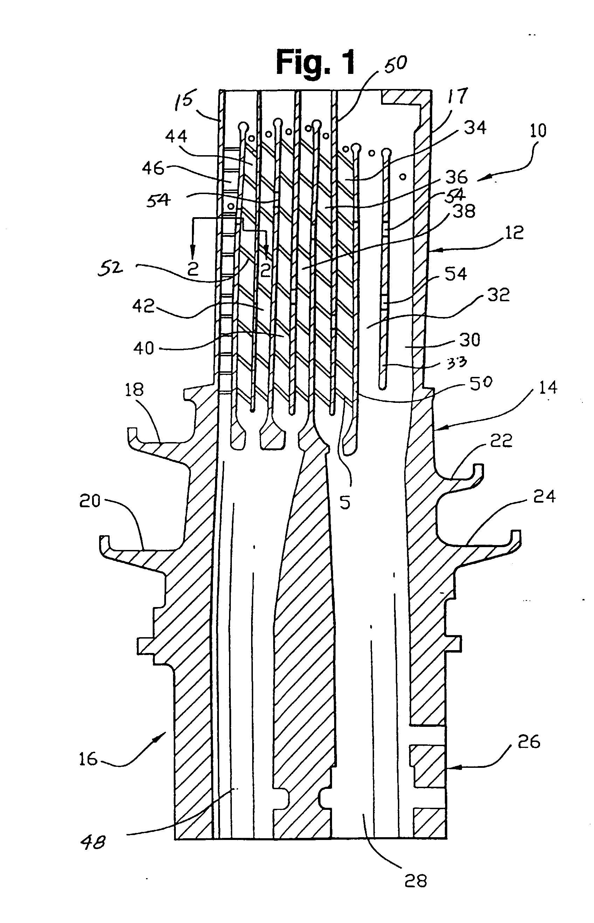

With reference to Figure 1, a turbine bucket construction 10 includes an airfoil portion 12 attached to a platform portion 14 which seals the shank 16 from the hot gases of the turbine flow path. The airfoil portion has leading and trailing edges 15 and 17, respectively. So-called angel wings 18, 20, 22 and 24 provide sealing of the wheel space cavities in a well known manner. The bucket is attached to the turbine rotor disk (not shown) by a conventional dovetail 26. The external features of the bucket as generally described above are typical of a stage 1 gas turbine bucket, but again, it will be appreciated that other components, including the stage 1 nozzle, the stage 2 nozzle, the stage 2 bucket, etc. can utilize the principles of the subject invention.

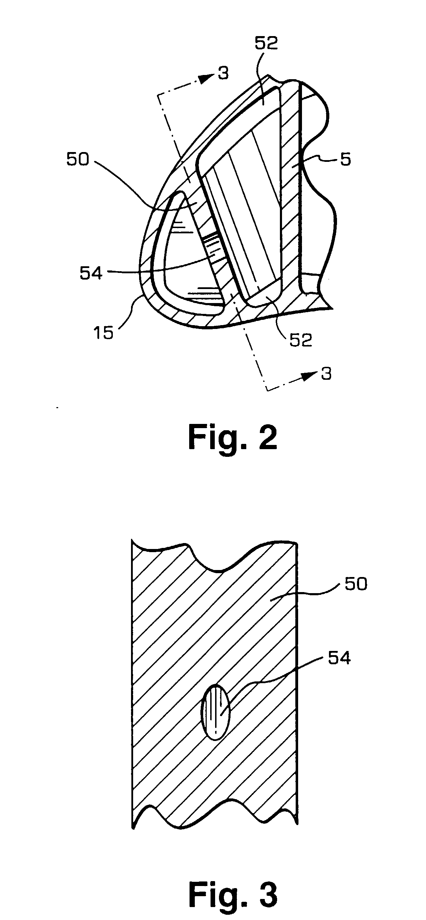

Within the interior of the bucket, a closed cooling circuit includes a serpentine arrangement of radial passages through which the coolant flows after entry into the bucket via inlet passage 28. In the illustrated arrangement, steam flows radially outwardly (upwardly in the figure) initially along the trailing edge of the bucket through parallel up-passages 30 and 32 separated by internal rib 33. The coolant then reverses direction as it flows radially inwardly (downwardly in the figure) through passage 34. The coolant continues to flow through the adjacent serpentine (alternating radially outward and inward) passages 36, 38, 40, 42, 44 and 46 until it exits the bucket via passage 48. It will be seen that within each passage, as defined by adjacent pairs of additional internal ribs 50, turbulators 52 extend from opposite side walls of the bucket, but it will be understood that such turbulators do not extend the full thickness of the airfoil portion, as best seen in Figure 2.

Between adjacent passages, the solid bucket walls or ribs 33 and 50 are formed with elliptical openings 54. These openings are formed by elliptical cross ties which connect adjacent solid parts of the ceramic core used in the casting of the bucket. After the core is removed by conventional processes, these elliptical openings are permitted to remain, and serve as coolant cross passages between the adjacent radial coolant passages of the closed circuit. As best seen in Figure 3, the openings 54 are elliptical in shape, so as to minimize stress concentrations with the bucket. In addition, and as best seen in Figure 1, the elliptical cross connections are laterally radially staggered in adjacent ribs to avoid any severe reductions in cross sectional area at any location within the interior of the bucket. In addition, the number and size of the openings are selected to minimize the effect on the cooling flow in the serpentine cooling circuit. Thus, depending on the cooling circuit configuration, some internal ribs (33 or 50) may have one or more than one passage 54, and the transverse cooling holes or openings may have different major and minor axis dimensions in the various ribs. Preferably, the passages 54 are radially offset in adjacent internal ribs.

## Claims

1. A gas turbine component having an airfoil portion and a shank portion, the airfoil portion having leading and trailing edges, and an internal cooling circuit, said internal fluid cooling circuit having a serpentine configuration including plural radial outflow passages and plural radial inflow passages, and wherein adjacent radial outflow and inflow passages are connected by one or more transverse openings located in radially extending ribs which separate the adjacent radial outflow and inflow passages, and wherein said openings have a substantially elliptical shape.

2. The component of claim 1 wherein said transverse openings are radially offset in adjacent ribs.

3. The component of claim 1 or 2 wherein some of the ribs have one transverse opening and other of the ribs have more than one transverse opening.

4. The component of claim 1, 2 or 3 wherein said transverse openings are formed during casting of the bucket.

5. The component of any preceding claim wherein said component comprises a rotating bucket.

6. The component of any one of claims 1 to 4 wherein said component comprises a stationary nozzle.

7. The component of any preceding claim wherein said transverse openings vary in size.
